# EUROPEAN PATENT SPECIFICATION

(11) **EP 1 387 353 B1**
(45) Date of publication and mention of the grant of the patent: **03.10.2007**
(21) Application number: 03254750.7
(22) Date of filing: 29.07.2003
(51) Int. Cl.: G11B 7/085, G11B 7/09

(54) **Method and apparatus for controlling objective lens to prevent disc from being scratched by the objective lens**
Verfahren und Vorrichtung zur Kontrolle einer Objektivlinse um das Verkratzen einer Scheibe durch die Objektivlinse zu verhindern
Procédé et dispositif de regulation d'une lentille de tête optique pour éviter la production de rayures sur une disque par la lentille

(30) Priority: 29.07.2002 KR 2002044629
(43) Date of publication of application: 04.02.2004
(73) Proprietor: SAMSUNG ELECTRONICS CO., LTD., Suwon-City, Kyungki-do (KR)
(72) Inventor: Choi, Byoung-ho, 108-1102 Shinyoungtong, Gyeonggi-do (KR); Jung, Soo-yul, 209-1304 Shinyoungtong, Gyeonggi-do (KR); Ma, Byung-in, Suwon-si Gyeonggi-do (KR); Park, In-sik, 615-801 Shinnamushil, Suwon-si Gyeonggi-do (KR)
(74) Representative: Robinson, Ian Michael

(56) References cited:
- EP-A- 0 724 257
- EP-A- 1 262 960
- US-A- 4 541 084
- US-A- 4 683 560
- US-A1- 2002 101 800
- PATENT ABSTRACTS OF JAPAN vol. 1997, no. 03, 31 March 1997 (1997-03-31) & JP 08 287477 A (MATSUSHITA ELECTRIC IND CO LTD), 1 November 1996 (1996-11-01)

## Description

The present invention relates to a method and apparatus for controlling an objective lens to prevent a disc from being scratched by the objective lens.

An objective lens having a large numerical aperture (NA) and a laser diode having a short wavelength have been recently used to increase recording density of an optical disc in an optical disc system. When NA increases and wavelength decreases, the focal distance becomes short. Thus, an objective lens easily brushes up against an optical disc, even by a small disturbance, and scratches the optical disc. Since next generation high-density optical discs such as blue discs (BD) aim to have a recording density about five times as high as DVDs, they use an objective lens having a large NA and a blue laser having a short wavelength. Due to this, the possibility that the objective lens will scratch the next generation high-density optical discs is high. In a case of a portable system, a distance between an optical disc and an objective lens is even shorter and physical disturbances are more frequent and severe. Thus, the possibility of the objective lens scratching the optical disc increases.

EP-A-0,724,257 discloses an optical disc reproducing apparatus in which the evacuation of the objective lens is initiated when the sum signal received by the optical detector falls below a certain level. The pre-characterising portion of the appended claims is based on this document.

This evacuation initiated by the sum signal is only performed when the sum signal goes down in a certain time after the focus error signal has exceeded a certain signal level. The present invention seeks to provide a less complex realisation.

An aim of the present invention is to provide a method and apparatus for controlling an objective lens so as to prevent an optical disc from being scratched by the objective lens in an optical disc system, and particularly in a mobile optical disc system.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
Figure 1 is a schematic view of an apparatus for preventing an optical disc from being scratched by an objective lens according to an embodiment of the present invention;
Figure 2 is a detailed view of a pickup shown in Figure 1;
Figures 3A-3C are graphs explaining a method of preventing an optical disc from being scratched by an objective lens according to an embodiment of the present invention;
Figures 4A-4C are graphs explaining a method of preventing an optical disc from being scratched by an objective lens according to another embodiment of the present invention;
Figures 5A-5C are graphs explaining a method of preventing an optical disc from being scratched by an objective lens according to still another embodiment of the present invention;
Figure 6 is a flowchart of a method of preventing an optical disc from being scratched by an objective lens according to an embodiment of the present invention;
Figure 7 is a flowchart of a method of preventing an optical disc from being scratched by an objective lens according to another embodiment of the present invention;
Figures 8A-8C and 9A-9C illustrate signals measured in executing a method of preventing an optical disc from being scratched by an objective lens according to one aspect of the present invention using an optical disc system having a pickup in which a laser diode having a NA of 0.7 and a wavelength of 500nm or less is installed.

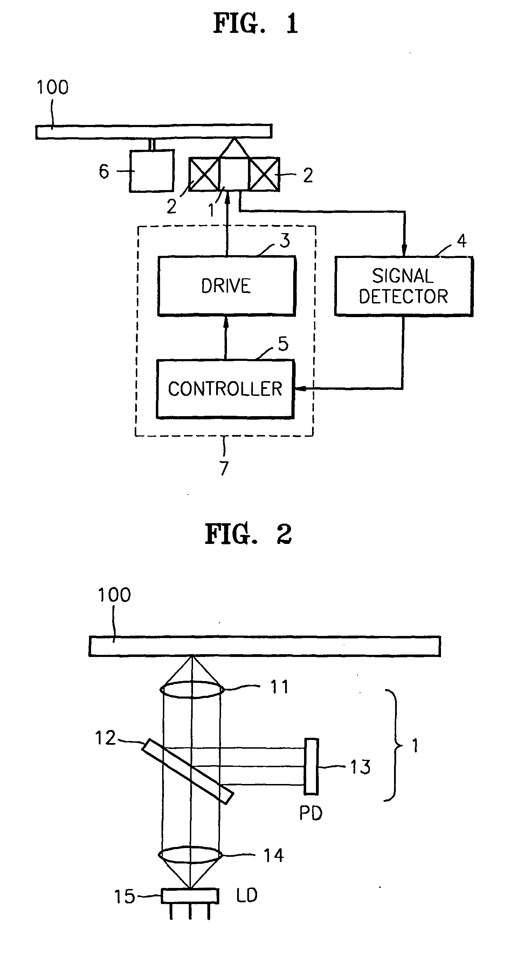

Figure 1 is a block diagram of an apparatus preventing an optical disc from being scratched by an objective lens according to an embodiment of the present invention. Referring to Figure 1, the apparatus includes a pickup 1, an actuator 2, a signal detector 4, and a controlling unit 7. The controlling unit 7 has a drive 3 and a controller 5. Reference numeral 6 denotes a spindle motor that rotates a disc 100.

The pickup 1 has an objective lens (not shown) that focuses a laser beam onto the disc 100. The actuator 2 actuates the pickup 1. The signal detector 4 detects a pull-in signal from a signal output from a photodiode (not shown) installed in the pickup 1. The controller 5 checks a level of the pull-in signal detected by the signal detector 4, and if the level of the pull-in signal is lower than, or equal to a predetermined critical level for at least a predetermined critical period of time, outputs to the drive 3 a control signal for controlling the objective lens to move away from the disc 100. The drive 3 outputs a drive signal corresponding to the control signal to the actuator 2. In other words, the drive 3 outputs a DC signal having a high level to the actuator 2 so as to move the pickup 1 away from the disc 100, and stops the actuator 2.

The critical time is set to a time for which the objective lens should not contact the disc 100 when the actuator 2 moves at a maximum speed. The critical level is set to a value measured at a level for which the objective lens in the pickup 1 should not contact the disc 100 when the pickup 1 moves toward the disc 100 during focus control due to a disturbance.

Figure 2 is a detailed view of the pickup 1 shown in Figure 1. Referring to Figure 2, the pickup 1 includes a laser diode (LD) 15, a collimating lens 14, an objective lens 11, a beam splitter 12, and a photodiode (PD) 13.

The LD 15 radiates a laser beam. The collimating lens 14 focuses a divergent beam into a parallel laser beam. The objective lens 11 focuses the laser beam onto a reflective surface of the disc 100. The focused laser beam is incident on and reflected from a recording surface of the disc 100. The beam splitter 12 splits the laser beam into an incident laser beam and a reflected laser beam and changes an optical path so that the reflected laser beam travels toward the PD 13. The PD 13 is a light-receiving device that receives the reflected laser beam and includes a plurality of division light receiving units. If the number of division light receiving units is two, the PD 13 is called a 2-division PD. If the number of division light receiving units is 4, the PD 13 is called a 4-division PD. If the number of division light receiving units is 8, the PD 13 is called an 8-division PD.

According to one aspect of the present invention, the pull-in signal refers to a sum signal of signals focused onto the plurality of division light receiving units of the PD 13 or such a sum signal that is filtered through a low-pass filter to remove high-frequency components. A focus error signal, necessary for control so that the laser beam is properly focused on the recording surface of the disc 100, is also generated from the signals focused onto the plurality of division light receiving units of the PD 13.

Components of the pickup 1 and the layout thereof are independent of the characteristics of an aspect of the present invention. Thus, the elements shown in Figure 2 and their structures may be modified. However, the PD 13 is a preferred element to generate the pull-in signal. The PD 13 may be arranged in various positions in consideration of the remaining elements.

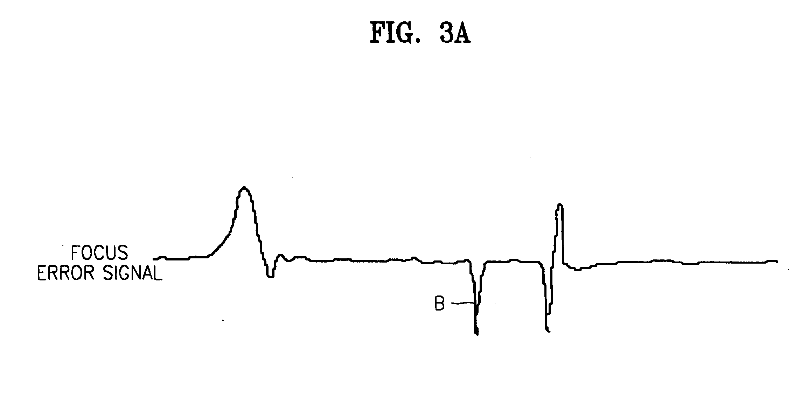

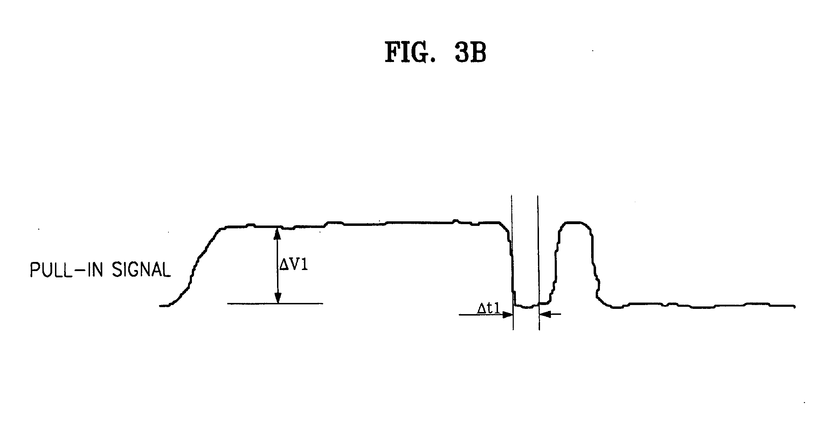

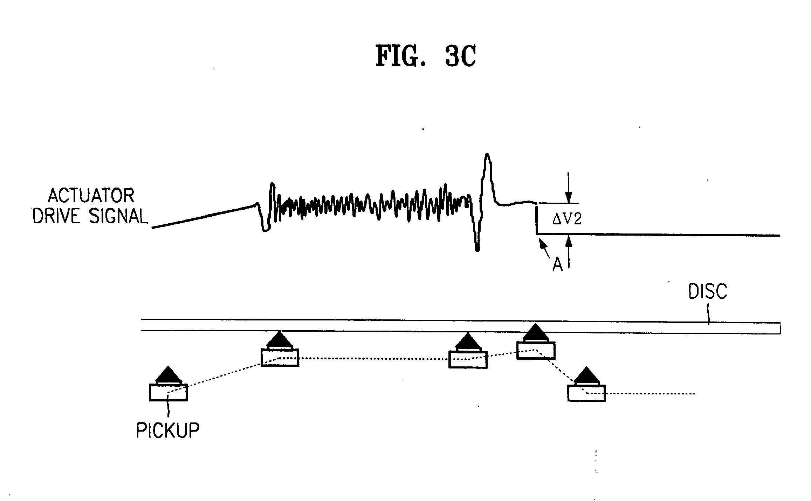

Figures 3A-3C are graphs explaining a method of preventing an optical disc from being scratched by an objective lens according to an embodiment of the present invention. As can be seen in Figures 3A-3C, a focus error signal, a pull-in signal, and an actuator drive signal are generated while the pickup 1 moves so that the pickup 1 moves away from the disc 100 when the objective lens 11 moves near enough to the disc 100 to scratch the disc 100 during a focus pull-in operation of the pickup 1.

When the laser beam is focused onto the recording surface of the disc 100, i.e., when the focus pull-in operation is performed, a level of the pull-in signal rises by an amount ΔV1 from an initial level to a predetermined DC level. When the pickup 1 is disturbed during the focus pull-in operation, the pickup 1 approaches the disc 100 abruptly. Then, the focus error signal at a predetermined DC level drops to a new level, generating a partial waveform B. Next, the pull-in signal drops to a level lower than a critical level according to one aspect of the present embodiment, i.e., to the initial level. If the pull-in signal stays at the initial level for a predetermined period of time Δt1 or longer, the pickup 1 continues moving toward the disc 100 and the objective lens 11 may impact against the disc 100. Therefore, before the objective lens 11 of the pickup 1 contacts the disc 100, a strong DC current is applied to the actuator 2 to force the pickup 1 to move away from the disc 100. The actuator drive signal stays at a DC level which drops by a predetermined amount ΔV2 at a point of time A occurring after the predetermined period of time Δt1. After the pickup 1 moves away from the disc 100, the pickup 1 stops. Thus, the pull-in signal rises again, and then falls to the initial level.

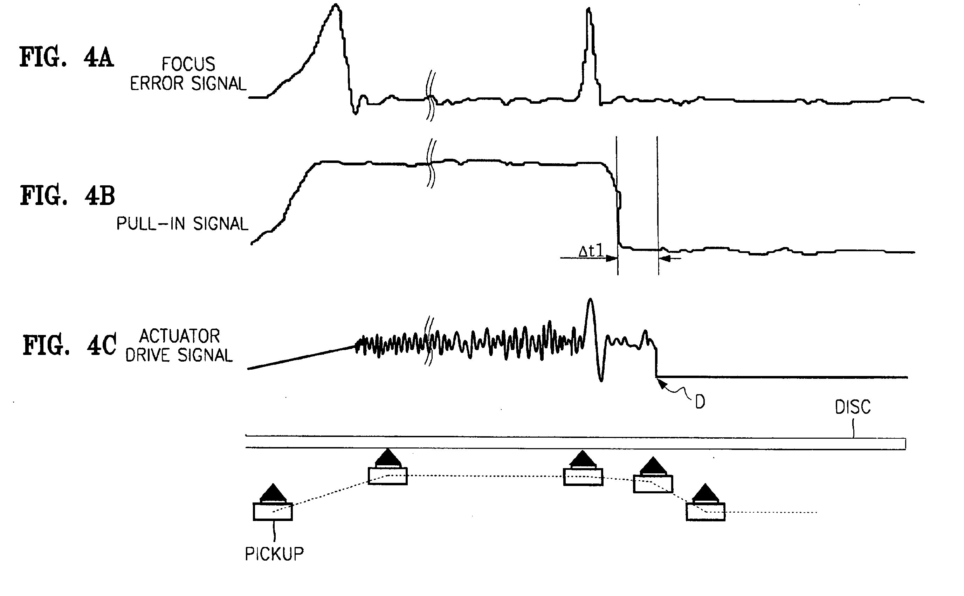

Figures 4A-4C are graphs explaining a method of preventing an optical disc from being scratched by an objective lens according to another embodiment of the present invention. As can be seen in Figures 4A-4C, a focus error signal, a pull-in signal, and an actuator signal are generated when the objective lens 11 moves away from the disc 100 during the focus pull-in operation of the pickup 1 due to a disturbance.

When the laser beam is focused onto the recording surface of the disc 100, i.e., when the focus pull-in operation is performed, the pull-in signal rises from an initial level to a predetermined DC level. If the pickup 1 suddenly moves away from the disc 100 during the focus pull-in operation due to a disturbance, the focus error signal, which was at the predetermined DC level, rises upward. The pull-in signal drops to a level lower than a critical level according to one aspect of the present embodiment, i.e., to the initial level. When the pull-in signal drops to the initial level, and then stays there for a predetermined period of time Δt1 or longer, the pickup 1 gets out of focus, and the objective lens 11 may impact against the disc 100 at any time. Thus, a strong DC current is applied to the actuator 2 to move the pickup 1 away from the disc 100, and stop the pickup 1. The strong DC current is applied to the actuator 2 until the pickup 1 stops. The actuator drive signal stays at a DC level which drops by a predetermined amount at time D after the predetermined period of time Δt1. Since the pickup 1 stops after moving away from the disc 100, the pull-in signal stays at the initial level.

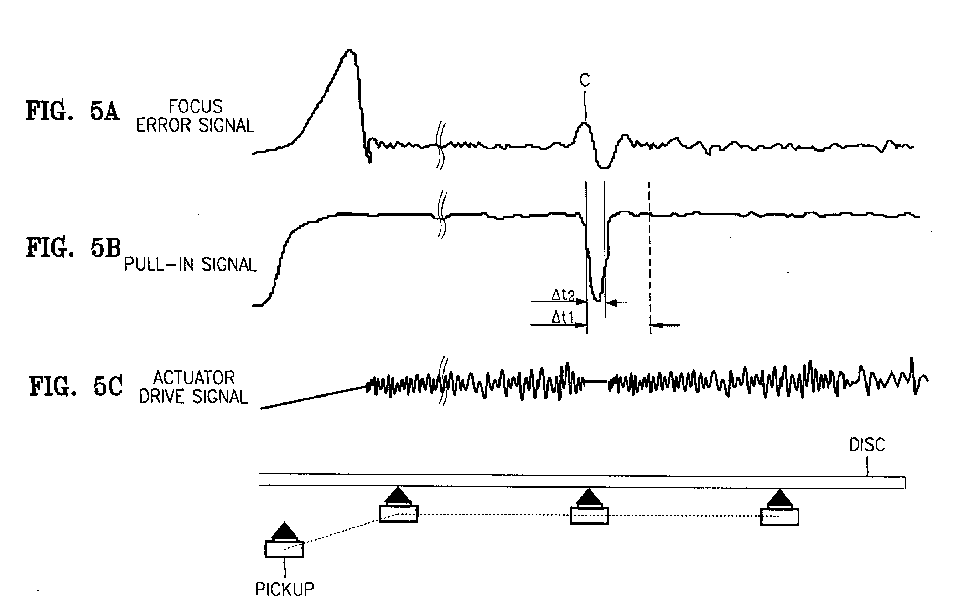

Figures 5A-5C are graphs explaining a method of preventing an optical disc from being scratched by an objective lens according to still another embodiment of the present invention.

As can be seen in Figures 5A-5C are graphs, a focus error signal, a pull-in signal, and an actuator drive signal are generated when a laser beam spot passes through a portion of the disc 100 on which scratches, black dots or the like are formed during the focus pull-in operation of the pickup 1.

When the laser beam is focused onto the recording surface of the disc 100, i.e., when the focus pull-in operation is performed, the pull-in signal rises by Δt1 from an initial level to a predetermined DC level. When the laser beam spot passes through a portion of the disc 100 on which scratches, black dots or the like are formed during the focus pull-in operation of the pickup 1, the focus error signal stays at a predetermined DC level, rises up, falls and then levels off, creating a partial waveform C. However, the level of the partial waveform C, shown in Figure 5A, is lower than the level of the waveform shown in Figure 3A and the partial waveform C, shown in Figure 5 A is sinusoidal in shape. Next, the pull-in signal drops to a level lower than a critical level according to the present embodiment, i.e., to the initial level. However, the pull-in signal does not stay at the initial level for at least a predetermined critical period of time Δt1. Instead, after a predetermined period of time Δt2 which is shorter than the predetermined critical period of time Δt1, the pull-in signal returns to the previous DC level. This indicates that the pickup 1 does not move toward the disc 100. Thus, the drive 3 does not perform any operations or the drive 3 outputs to the actuator 2 the signal that was previously applied to the actuator 2, i.e., an average value of the actuator drive signal.

Methods of preventing a disc from being scratched will be described using the above-described structure for aid of illustration, the methods not being dependent on a particular structure.

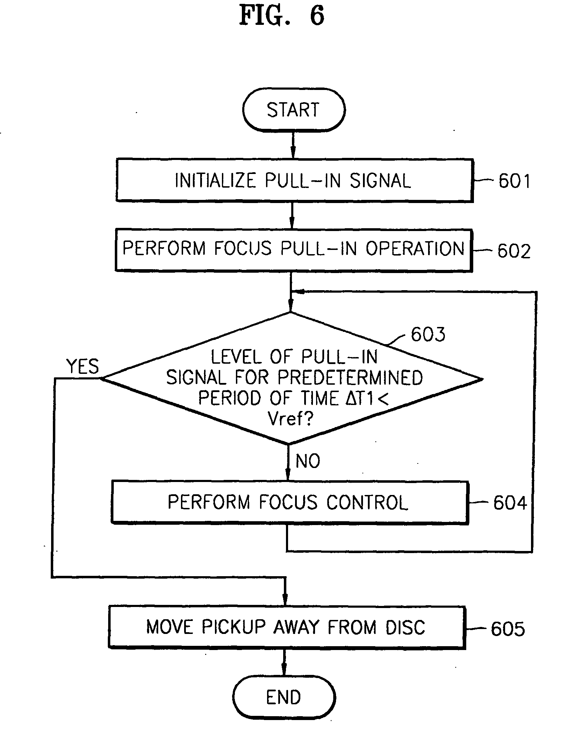

Figure 6 is a flowchart of a method of preventing an optical disc from being scratched by an objective lens according to an embodiment of the present invention.

In operation 601, the controlling unit 7 sets an initial value after turning off the LD 15 or moving the pickup 1 to a position where a laser beam emitted from the objective lens 11 is reflected from the recording surface of the disc 100 and is not incident on the PD 13. The initial value is set to a value for easily checking changes in the level of the pull-in signal in various situations as described with reference to Figures 3A-3C, 4A-4C, and 5A-5C. In operation 602, the controlling unit 7 performs focus control so that a spot of a laser beam is exactly focused onto the recording surface of the disc 100. In other words, the controlling unit 7 carries out a focus pull-in operation. If the focus pull-in operation is completed, the intensity of light focused onto the PD 13 is a maximum. Thus, a pull-in signal obtained in this state has a proper DC level. Therefore, the level of the pull-in signal can be measured to check whether the focus pull-in operation has been properly performed. The pull-in signal stays at a predetermined DC level while the spot of the laser beam is exactly focused.

In operation 603, the controlling unit 7 checks whether the level of the pull-in signal becomes lower than a predetermined critical level Vref and remains below the critical level for a predetermined critical period of time Δt1.

If the level of the pull-in signal is not lower than the predetermined critical level for the predetermined critical period of time Δt1, in operation 604, the controlling unit 7 determines that the pickup 1 is not moving toward the disc 100, and then performs focus control continuously.

If the level of the pull-in signal is lower than the predetermined critical level Vref for the predetermined critical period of time Δt1, in operation 605, the controlling unit 7 determines that the pickup 1 is moving toward the disc 100, and then outputs to the actuator 2 an actuator drive signal for moving the pickup 1 away from the disc 100 or for stopping the pickup 1 after moving the pickup 1.

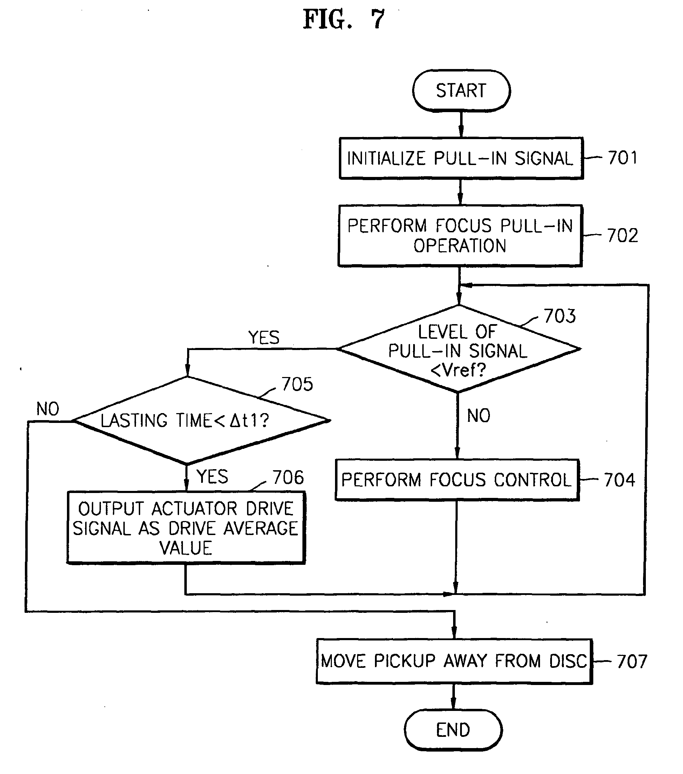

Figure 7 is a flowchart of a method of preventing an optical disc from being scratched by an objective lens according to another embodiment of the present invention. Referring to Figure 7, in operation 701, the controlling unit 7 sets an initial value of a pull-in signal when turning off the LD 15 or moving the pickup 1 to a position where a laser beam emitted from the objective lens 11 is reflected from the recording surface of the disc 100 and is not incident on the PD 13. The initial value is set to a value for easily checking changes in the level of the pull-in signal in various situations as described with reference to Figures 3A-3C, 4A-4C, and 5A-5C. In operation 702, the controlling unit 7 performs focus control so that a spot of a laser beam is exactly focused onto the recording surface of the disc 100. In other words, the controlling unit 7 carries out a focus pull-in operation. If the focus pull-in operation is completed, the intensity of light focused onto the PD 13 is the highest. Thus, a pull-in signal obtained in this state has a proper DC level. Therefore, the level of the pull-in signal can be measured to check whether the focus pull-in operation has been properly performed. The pull-in signal stays at a predetermined DC level while the spot of the laser beams is exactly focused.

In operation 703, the controlling unit 7 checks whether the level of the pull-in signal becomes lower than a predetermined critical level Vref. If the level of the pull-in signal does not become lower than the predetermined critical level Vref, in operation 704, the controlling unit 7 continues performing the focus control.

If the level of the pull-in signal becomes lower than the predetermined critical level Vref, in operation 704, the controlling unit 7 checks whether the level of the pull-in signal stays there for a predetermined critical period of time Δt1 or more. If the level of the pull-in signal becomes lower than the predetermined critical level Vref but does not stay there for the predetermined critical period of time Δt1, in operation 706, the controlling unit 7 determines that the pickup 1 does not move toward the disc 100, and then outputs to the actuator 2 an average value of a drive signal that was previously output to the actuator 2, i.e., a drive average value.

If the level of the pull-in signal remains lower than the predetermined critical level Vref for the predetermined critical period of time Δt1 or more, in operation 707, the controlling unit 7 determines that the pickup 1 is moving toward the disc 100, and then outputs to the actuator 2 the drive signal for moving the pickup 1 away from the disc 100 or for stopping the pickup 1 after moving the pickup 1.

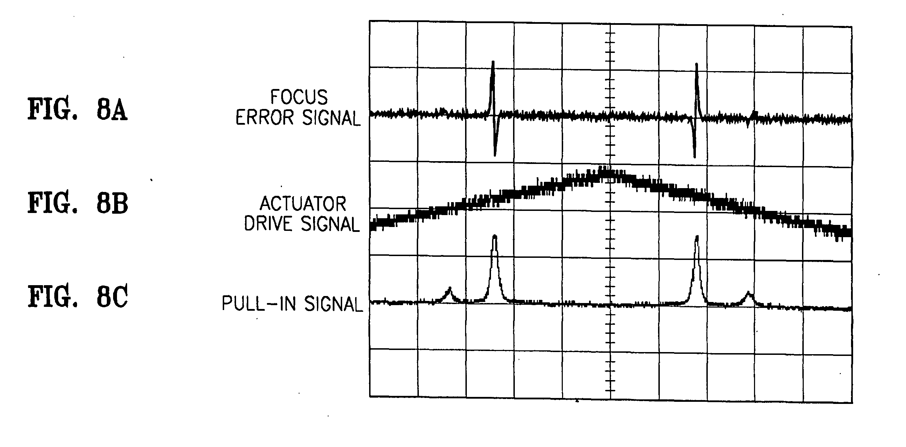

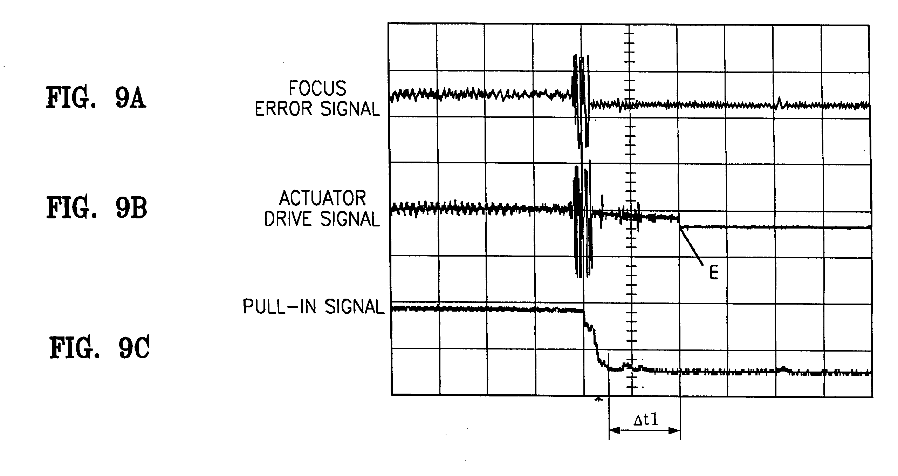

Figures 8A-8C and 9A-9C illustrate signals measured for executing a method of preventing an optical disc from being scratched by an objective lens according to an aspect of the present invention using an optical disc system having a pickup in which a laser diode having a NA of 0.7 or more and a wavelength of 500nm or less is installed.

Referring to Figures 8A-8C, an actuator drive signal for actuating the actuator 2, a focus error signal, and a pull-in signal are generated so that the pickup 1 is close to and away from the disc 100, i.e., the pickup 1 moves up and down. While focus control is performed, i.e., a focus pull-in operation, is performed, the pull-in signal is maintained at a predetermined DC level.

Referring to Figures 9A-9C, an actuator drive signal, a focus error signal, and a pull-in signal are generated when a method of preventing a disc from being scratched by an objective lens according to the present invention is executed. The pull-in signal stays at a predetermined DC level, drops to an initial level, and then stays at the initial level for a predetermined critical period of time Δt1. Then, the actuator drive signal stays at a predetermined DC level from a point of time E after the predetermined critical period of time Δt1 so that the pickup 1 is distant from the disc 100. Thus, the pickup 1 stops after moving so that the pickup 1 is distant from the disc 100.

As described above, the aspects of the present invention provide a method and apparatus for controlling an objective lens to prevent a disc from being scratched by the objective lens by properly coping with a situation where the objective lens moves close to the disc during a focus pull-in operation due to a disturbance and scratches the disc. In particular, an aspect of the present invention is very effective in a high-density recording system in which an objective lens (or a pickup) moves close to a disc during a focus pull-in operation due to the short focal distance or a mobile optical disc system in which disturbances are frequent and sometimes severe.

According to another aspect of the invention, the controlling unit 7 includes a computer implementing the methods in Figures 6 and 7 using data encoded on a computer readable medium.

Although a few preferred embodiments have been shown and described, it will be appreciated by those skilled in the art that various changes and modifications might be made without departing from the scope of the invention, as defined in the appended claims.

## Claims

1. A method of preventing a disc (100) from being scratched by an objective lens (11), the method comprising the steps of:
performing a focus pull-in operation; and
if a level of a pull-in signal, which is a photodetector sum signal, remains lower than a predetermined critical level, controlling the objective lens (11) so as to move away from the disc (100);
**characterised in that**:
the pull-in signal remains lower than said level for at least a predetermined critical period of time, which time is set to a time for which the objective lens (11) remains a minimum distance from the disc (100) without damaging the disc (100) when an actuator (2) actuating a pickup (1) moves at an operational maximum speed; and
if the time is not at least the predetermined critical period of time, outputting an average value of a drive signal that was previously applied to the actuator (2) for actuating a pickup (1) having the objective lens (11).

2. The method of claim 1, wherein the step of controlling the objective lens (11) comprises applying a direct current signal to the actuator (2) for actuating a pickup (1) having the objective lens (11).

3. The method of claim 2, wherein the direct current signal is applied to stop the actuator (2).

4. The method of any preceding claim, wherein the pull-in signal is one of a sum signal of signals focused onto a plurality of division light-receiving units of a photodiode (13) and a signal generated by filtering a sum signal through a low-pass filter.

5. The method according to any preceding claim, wherein the predetermined critical level is set to a value measured at a level for which an objective lens (11) in a pickup (1) should not contact a disc (100) when the pickup (1) moves toward the disc (100) during focus control due to a disturbance.

6. The method according to any preceding claim, wherein the method comprises:
initialising a pull-in signal;
checking a level of the pull-in signal; and
checking a time for which the level of the pull-in signal remains lower than the predetermined critical level.

7. The method of any preceding claim, the method including the step of initialising the pull-in signal, and wherein the initializing of the pull-in signal comprises initializing the pull-in signal to a level lower than a predetermined direct current level so as to easily detect the predetermined direct current level during the focus pull-in operation.

8. A computer readable medium encoded with processing instructions to be executed by a computer for performing the method of any preceding claim.

9. An apparatus preventing a disc (100) from being scratched by an objective lens (11), the apparatus comprising:
a pickup (1) having an objective lens (11);
an actuator (2) actuating the pickup (1);
a signal detector (4) detecting a pull-in signal which is a photodetector sum signal, from the pickup (1); and
a controlling unit (7) arranged so that if a level of the pull-in signal is maintained lower than a predetermined critical level, the control unit (7) controls the actuator (2) so that the objective lens (11) moves away from the disc (100);
**characterised in that**:
the pull-in signal remains lower than said level for at least a predetermined critical period of time, which time is set to a time for which the objective lens (11) remains a minimum distance from the disc (100) without damaging the disc (100) when the actuator (2) moves at an operational maximum speed; and
if the time is not at least the predetermined critical period of time, the controlling unit (7) is arranged to output an average value of a drive signal that was previously applied to the actuator (2) for actuating a pickup (1) having the objective lens (11).

10. The apparatus of claim 9, wherein the controlling unit (7) applies a direct current signal to the actuator (2).

11. The apparatus of claim 9 or 10, wherein the controlling unit (7) applies a direct current signal to the actuator (2) so as to stop the actuator (2).

12. The apparatus of any of claims 9, 10 or 11, wherein the pull-in signal is one of a sum signal of signals focused onto a plurality of division light receiving units of a photodiode (13) and a signal generated by filtering a sum signal through a low-pass filter.

13. The apparatus according to any of claims 9 to 12, wherein the predetermined critical level is set to a value measured at a level for which the objective lens (11) in the pickup (1) should not contact the disc (100) when the pickup (1) moves toward the disc (100) during focus control due to a disturbance.

14. The apparatus according to any of claims 9 to 13, the apparatus comprising:
a controller (5) checking levels of a detected signal and outputting a control signal; and
a drive (3) moving the pickup (1) based on the control signal.

15. The apparatus of any of claims 9 to 14, the pickup comprising:
a laser diode (15) radiating a beam of light;
a collimating lens (14) focusing the beam of light into a parallel beam of light;
a beam splitter (12) splitting the beam of light into an incident beam of light and a reflected beam of light and changing the path of the reflected beam of light; and
a photodiode (13) receiving the reflected beam of light
wherein the objective lens (11) focuses the parallel beam onto the disc (100).

16. The apparatus of claim 15, the laser diode (15) having a NA of at least 0.7, and a wavelength of 500nm or less.

## Patentansprüche

1. Verfahren zum Schutz einer Platte (100) vor Verkratzen durch eine Objektivlinse (11), wobei das Verfahren folgende Schritte enthält:
Ausführen eines Fokus-Hereinziehvorgangs; und,
sofern ein Pegel eines Hereinziehsignals, das ein Fotodetektor-Summensignal ist, niedriger bleibt als ein vorbestimmter kritischer Pegel, Steuern der Objektivlinse (11) derart, dass sie von der Platte (100) wegbewegt wird;
**dadurch gekennzeichnet, dass**:
das Hereinziehsignal wenigstens eine vorbestimmte kritische Zeitperiode niedriger bleibt als dieser Pegel, wobei diese Zeit auf eine Zeit eingestellt ist, für die die Objektivlinse (11) einen minimalen Abstand von der Platte (100) beibehält, ohne die Platte (100) zu beschädigen, wenn sich ein Betätigungselement (2), das einen Abnehmer (1) betätigt, mit einer maximalen Betriebsgeschwindigkeit bewegt; und,
wenn die Zeit nicht wenigstens die vorbestimmte kritische Zeitperiode ist, ein Durchschnittswert eines Antriebssignals ausgegeben wird, das zuvor dem Betätigungselement (2) zugeführt wurde, um einen Abnehmer (1) zu betätigen, der über die Objektivlinse (11) verfügt.

2. Verfahren nach Anspruch 1, bei dem der Schritt des Steuerns der Objektivlinse (11) das Zuführen eines Gleichstromsignals zum Betätigungselement (2) beinhaltet, um einen Abnehmer (1) zu betätigen, der über die Objektivlinse (11) verfügt.

3. Verfahren nach Anspruch 2, bei dem das Gleichstromsignal zugeführt wird, um das Betätigungselement (2) zu stoppen.

4. Verfahren nach einem der vorhergehenden Ansprüche, bei dem das Hereinziehsignal entweder ein Summensignal von Signalen ist, die auf eine Vielzahl von lichtempfangenden Teilungseinheiten einer Fotodiode (13) fokussiert werden, oder ein Signal, das durch Filtern eines Summensignals durch ein Tiefpassfilter erzeugt wird.

5. Verfahren nach einem der vorhergehenden Ansprüche, bei dem der vorbestimmte kritische Pegel auf einen Wert eingestellt wird, der bei einem Pegel gemessen wird, bei dem eine Objektivlinse (11) in einem Abnehmer (1) nicht die Platte (100) berühren sollte, wenn sich der Abnehmer (1) während der Fokussteuerung aufgrund einer Störung auf die Platte (100) zu bewegt.

6. Verfahren nach einem der vorhergehenden Ansprüche, wobei das Verfahren enthält:
Initialisieren eines Hereinziehsignals;
Prüfen eines Pegels des Hereinziehsignals; und
Prüfen einer Zeit, für die der Pegel des Hereinziehsignals niedriger bleibt, als der vorbestimmte kritische Pegel.

7. Verfahren nach einem der vorhergehenden Ansprüche, wobei das Verfahren den Schritt des Initialisierens des Hereinziehsignals enthält, und wobei das Initialisieren des Hereinziehsignals das Initialisieren des Hereinziehsignals auf einen niedrigeren Pegel als einen vorbestimmten Gleichstrompegel beinhaltet, so dass auf einfache Weise der vorbestimmte Gleichstrompegel während des Fokus-Hereinziehvorgangs erfasst wird.

8. Computerlesbares Medium, das mit Verarbeitungsanweisungen codiert ist, die von einem Computer ausgeführt werden, um das Verfahren eines der vorhergehenden Ansprüche auszuführen.

9. Vorrichtung zum Schutz einer Platte (100) vor Verkratzen durch eine Objektivlinse (11), wobei die Vorrichtung enthält:
einen Abnehmer (1), der über eine Objektivlinse (11) verfügt;
ein Betätigungselement (2), das einen Abnehmer (1) betätigt;
einen Signaldetektor (4), der ein Hereinziehsignal, das ein Fotodetektor-Summensignal ist, vom Abnehmer (1) erfasst; und
eine Steuereinheit (7), die so angeordnet ist, dass, wenn ein Pegel des Hereinziehsignals niedriger bleibt als ein vorbestimmter kritischer Pegel, die Steuereinheit (7) das Betätigungselement (2) so steuert, dass sich die Objektivlinse (11) von der Platte (100) wegbewegt;
**dadurch gekennzeichnet, dass**:
das Hereinziehsignal wenigstens eine vorbestimmte kritische Zeitperiode niedriger bleibt als dieser Pegel, wobei diese Zeit auf eine Zeit eingestellt ist, für die die Objektivlinse (11) einen minimalen Abstand von der Platte (100) beibehält, ohne die Platte (100) zu beschädigen, wenn sich das Betätigungselement (2) mit einer maximalen Betriebsgeschwindigkeit bewegt; und,
wenn die Zeit nicht wenigstens die vorbestimmte kritische Zeitperiode ist, die Steuereinheit (7) so angeordnet ist, dass sie einen Durchschnittswert eines Antriebssignals ausgibt, das zuvor dem Betätigungselement (2) zugeführt wurde, um einen Abnehmer (1) zu betätigen, der über die Objektivlinse (11) verfügt.

10. Vorrichtung nach Anspruch 9, bei der die Steuereinheit (7) dem Betätigungselement (2) ein Gleichstromsignal zuführt.

11. Vorrichtung nach Anspruch 9 oder 10, bei der die Steuereinheit (7) dem Betätigungselement (2) ein Gleichstromsignal zuführt, um so das Betätigungselement (2) zu stoppen.

12. Vorrichtung nach einem der Ansprüche 9, 10 oder 11, bei dem des Hereinziehsignal entweder ein Summensignal von Signalen ist, die auf eine Vielzahl von lichtempfangenden Teilungseinheiten einer Fotodiode (13) fokussiert werden, oder ein Signal, das durch Filtern eines Summensignals durch ein Tiefpassfilter erzeugt wird.

13. Vorrichtung nach einem der Ansprüche 9 bis 12, bei der der vorbestimmte kritische Pegel auf einen Wert eingestellt ist, der bei einem Pegel gemessen wird, bei dem die Objektivlinse (11) im Abnehmer (1) nicht die Platte (100) berühren sollte, wenn sich der Abnehmer (1) während der Fokussteuerung infolge einer Störung auf die Platte (100) zu bewegt.

14. Vorrichtung nach einem der Ansprüche 9 bis 13, wobei die Vorrichtung enthält:
eine Steuerung (5), die Pegel eines erfassten Signals empfängt und ein Steuersignal ausgibt; und
einen Antrieb (3), der den Abnehmer (1) auf der Basis des Steuersignals bewegt.

15. Vorrichtung nach einem der Ansprüche 9 bis 14, wobei der Abnehmer enthält:
eine Laserdiode (15), die einen Lichtstrahl abstrahlt;
eine Collimatorlinse (14), die den Lichtstrahl zu einem Strahl parallelen Lichts fokussiert;
einen Strahlteiler (12), der den Lichtstrahl in einen auftreffenden Lichtstrahl und einen reflektierten Lichtstrahl teilt und den Weg des reflektierten Lichtstrahls ändert; und
eine Fotodiode (13), die den reflektierten Lichtstrahl empfängt;
wobei die Objektivlinse (11) den parallelgerichteten Strahl auf die Platte (100) fokussiert.

16. Vorrichtung nach Anspruch 15, wobei die Laserdiode (15) über eine NA von wenigstens 0,7 und eine Wellenlänge von 500 nm oder weniger verfügt.

## Revendications

1. Procédé pour éviter qu'un disque (100) soit rayé par un objectif (11), le procédé comportant les étapes consistant à :
effectuer une opération d'enclenchement de focalisation, et
si un niveau d'un signal d'enclenchement, qui est un signal de somme de photodétecteur, reste inférieur à un niveau critique prédéterminé, commander l'objectif (11) de manière à l'éloigner du disque (100),
**caractérisé en ce que** :
le signal d'enclenchement reste inférieur audit niveau pendant au moins une période de temps critique prédéterminée, lequel temps est établi à un temps pendant lequel l'objectif (11) reste à une distance minimum du disque (100) sans détériorer le disque (100) lorsqu'un actionneur (2) actionnant une tête de lecture (1) se déplace à une vitesse opérationnelle maximum, et
si le temps n'est pas au moins la période de temps critique prédéterminée, délivrer en sortie une valeur moyenne d'un système d'entraînement qui a été appliquée précédemment à l'actionneur (2) pour actionner une tête de lecture (1) ayant l'objectif (11).

2. Procédé selon la revendication 1, dans lequel l'étape de commande de l'objectif (11) comporte l'application d'un signal en courant continu à l'actionneur (2) pour actionner une tête de lecture (1) ayant l'objectif (11).

3. Procédé selon la revendication 2, dans lequel le signal en courant continu est appliqué pour stopper l'actionneur (2).

4. Procédé selon l'une quelconque des revendications précédentes, dans lequel le signal d'enclenchement est l'un parmi un signal de somme de signaux focalisés sur une pluralité d'unités de réception de lumière divisées d'une photodiode (13) et un signal généré par filtrage d'un signal de somme à travers un filtre passe-bas.

5. Procédé selon l'une quelconque des revendications précédentes, dans lequel le niveau critique prédéterminé est établi à une valeur mesurée à un niveau pour lequel un objectif (11) dans une tête de lecture (1) ne devrait pas venir au contact d'un disque (100) lorsque la tête de lecture (1) se déplace vers le disque (100) pendant la commande de focalisation due à une perturbation.

6. Procédé selon l'une quelconque des revendications précédentes, dans lequel le procédé comporte les étapes consistant à :
initialiser un signal d'enclenchement,
contrôler un niveau du signal d'enclenchement, et
contrôler un temps pendant lequel le niveau du signal d'enclenchement reste inférieur au niveau critique prédéterminé.

7. Procédé selon l'une quelconque des revendications précédentes, le procédé incluant l'étape consistant à initialiser le signal d'enclenchement, et dans lequel l'initialisation du signal d'enclenchement comporte l'initialisation du signal d'enclenchement à un niveau inférieur à un niveau de courant continu prédéterminé de manière à détecter facilement le niveau de courant continu prédéterminé pendant l'opération d'enclenchement de focalisation.

8. Support lisible par ordinateur codé à l'aide d'instructions de traitement à exécuter par un ordinateur pour effectuer le procédé selon l'une quelconque des revendications précédentes.

9. Dispositif pour éviter qu'un disque (100) soit rayé par un objectif (11), le dispositif comportant :
une tête de lecture (1) ayant un objectif (11),
un actionneur (2) actionnant la tête de lecture (1),
un détecteur de signal (4) détectant un signal d'enclenchement, qui est un signal de somme de photodétecteur, provenant de la tête de lecture (1), et
une unité de commande (7) conçue de sorte que si un niveau du signal d'enclenchement est maintenu inférieur à un niveau critique prédéterminé, l'unité de commande (7) commande l'actionneur (2) de sorte que l'objectif (11) s'éloigne du disque (100),
**caractérisé en ce que** :
le signal d'enclenchement reste inférieur audit niveau pendant au moins une période de temps critique prédéterminée, lequel temps est établi à un temps pendant lequel l'objectif (11) reste à une distance minimum du disque (100) sans détériorer le disque (100) lorsque l'actionneur (2) se déplace à une vitesse opérationnelle maximum, et
si le temps n'est pas au moins la période de temps critique prédéterminée, l'unité de commande (7) est conçue pour délivrer en sortie une valeur moyenne d'un signal d'entraînement qui a été appliquée précédemment à l'actionneur (2) pour actionner une tête de lecture (1) ayant l'objectif (11).

10. Dispositif selon la revendication 9, dans lequel l'unité de commande (7) applique un signal en courant continu à l'actionneur (2).

11. Dispositif selon la revendication 9 ou 10, dans lequel l'unité de commande (7) applique un signal en courant continu à l'actionneur (2) de manière à stopper l'actionneur (2).

12. Dispositif selon l'une quelconque des revendications 9, 10 ou 11, dans lequel le signal d'enclenchement est l'un parmi un signal de somme de signaux focalisés sur une pluralité d'unités de réception de lumière divisées d'une photodiode (13) et un signal généré par filtrage d'un signal de somme à travers un filtre passe-bas.

13. Dispositif selon l'une quelconque des revendications 9 à 12, dans lequel le niveau critique prédéterminé est établi à une valeur mesurée à un niveau pour lequel l'objectif (11) dans la tête de lecture (1) ne devrait pas venir au contact d'un disque (100) lorsque la tête de lecture (1) se déplace vers le disque (100) pendant la commande de focalisation due à une perturbation.

14. Dispositif selon l'une quelconque des revendications 9 à 13, le dispositif comportant :
un dispositif de commande (5) contrôlant des niveaux d'un signal détecté et délivrant en sortie un signal de commande, et
un dispositif d'entraînement (3) déplaçant la tête de lecture (1) sur la base du signal de commande.

15. Dispositif selon l'une quelconque des revendications 9 à 14, la tête de lecture comportant :
une diode laser (15) irradiant un faisceau de lumière,
une lentille collimatrice (14) focalisant le faisceau de lumière en un faisceau de lumière parallèle,
un diviseur de faisceau (12) divisant le faisceau de lumière en un faisceau de lumière incident et un faisceau de lumière réfléchi et changeant le trajet du faisceau de lumière réfléchi, et
une photodiode (13) recevant le faisceau de lumière réfléchi,
dans lequel l'objectif (11) focalise le faisceau parallèle sur le disque (100).

16. Dispositif selon la revendication 15, la diode laser (15) ayant une ouverture numérique (NA) d'au moins 0,7, et une longueur d'onde de 500 nm ou moins.
